# EUROPEAN PATENT APPLICATION

(11) **EP 4 431 329 A1**
(43) Date of publication of application: **18.09.2024**
(21) Application number: 24158535.5
(22) Date of filing: 20.02.2024
(51) Int. Cl.: B60K 17/04, F16H 57/04

(54) **REDUCTION UNIT**

(30) Priority: 14.03.2023 IT 202300004710
(71) Applicant: O.M.C.I. - Officine Metalmeccaniche Costruzioni Industriali - Societa' Per Azioni, 41013 Castelfranco Emilia, Frazione Cavazzona (MO) (IT)
(72) Inventor: MAGNI, Pietro, 41124 MODENA (IT); MAGNI, Giorgio, 41124 MODENA (IT)
(74) Representative: Modiano, Micaela Nadia

(57) **Abstract**

A reduction unit for airport tractors, forklift trucks and work vehicles (100) in general for the movement of goods, equipment and vehicles. The reduction unit (1) comprises at least:
- a main shaft (2), which rotates about a main axis (A) and can be coupled to the output shaft of an engine (101) of the work vehicle (100),
- a gear assembly (3), comprising at least one input member (4), driven in rotation by the main shaft (2), and a terminal member (5), configured for rotation about the main axis (A) with an angular speed that is different from the angular speed of the main shaft (2).

The terminal member (5) is furthermore configured for integral coupling, direct or indirect, to at least one driving wheel (102) of the work vehicle (100).

The reduction unit comprises a hollow sleeve (6), which coaxially accommodates at least one longitudinal portion (2a) of the main shaft (2) and which is provided with a threading (6a) along its lateral surface; a channel (9) which can be passed through by a cooling fluid is delimited between the threading (6a) and a body (8) for containing the sleeve (6).

## Description

The present invention relates to a reduction unit for airport tractors, forklift trucks and work vehicles in general for the movement of goods, equipment and vehicles.

As is known, airport tractors (or towing tractors) are vehicles that are used for moving aircraft, for example to execute the "pushback" maneuver, which consists of pushing backward an aircraft parked at an airport terminal until it reaches the taxiway.

Typically, tractors of the type described above are slow and heavy, weighing up to several dozen tons: the energy necessary for movement and traction is supplied to each driving wheel by a respective gear motor, which is equipped first of all with an engine, usually electric or hydraulic.

In all these cases, the output shaft of the engine is typically associated with a speed reduction unit, which also appreciably reduces the number of revolutions of the shaft, and which, by means of an adapted gear assembly, therefore transfers the motive force to the respective wheel of the tractor.

Such implementation solution is not however devoid of drawbacks.

In more detail, it has been found that a crucial aspect is represented by the cooling of the reduction unit: although in fact contrivances and techniques are known for cooling the engine, which are considered for the most part satisfactory, increasingly often the market complains of defects and problems in operation caused by the difficulty of adequately controlling the temperature of the reduction unit, which is still subject to the risk of overheating. The reduction unit in fact is usually enclosed in a metal box which obstructs adequate dispersion of the heat outward.

In particular, such problems arise with greater frequency when the tractor is used to tow the aircraft for distances much greater than those typical of the "pushback" maneuver described above (and for which it is usually ), as happens when the aircraft is towed to a hangar for maintenance or repair (such hangars may be several kilometers from the terminal). In these cases in fact, the reduction unit is evidently called on to operate for an extended time and the risk of excessive overheating is very real.

Similar problems are also encountered in the reduction units of other work vehicles designed for moving goods (and/or equipment and/or vehicles), such as for example those installed on board forklift trucks.

The aim of the present invention is to solve the above-mentioned problems, by providing a reduction unit which is provided with an effective cooling system.

Within this aim, an object of the invention is to provide a work vehicle for the movement of goods, equipment and vehicles, in which the driving wheels are associated with respective reduction units that are effectively cooled.

Another object of the invention is to provide a reduction unit provided with effective countermeasures for preventing the overheating of the components that are most subjected to thermal stress.

Another object of the invention is to provide a reduction unit which ensures a high reliability of operation.

Another object of the invention is to provide a reduction unit which adopts an alternative technical and structural architecture to those of conventional reduction units.

Another object of the invention is to provide a reduction unit which can be easily implemented using elements and materials that are readily available on the market.

Another object of the invention is to provide a reduction unit which is of low cost and safely applied.

This aim and these and other objects which will become better apparent hereinafter are achieved by a reduction unit according to claim 1 and by a work vehicle according to claim 11.

Further characteristics and advantages of the invention will become better apparent from the description of a preferred, but not exclusive, embodiment of the reduction unit according to the invention, which is illustrated by way of non-limiting example in the accompanying drawings wherein:

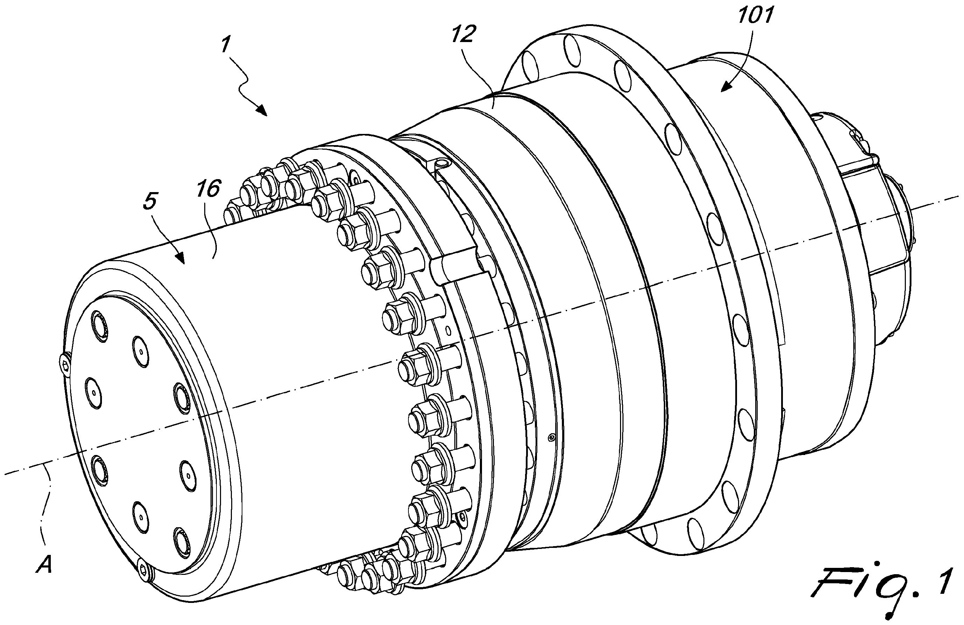

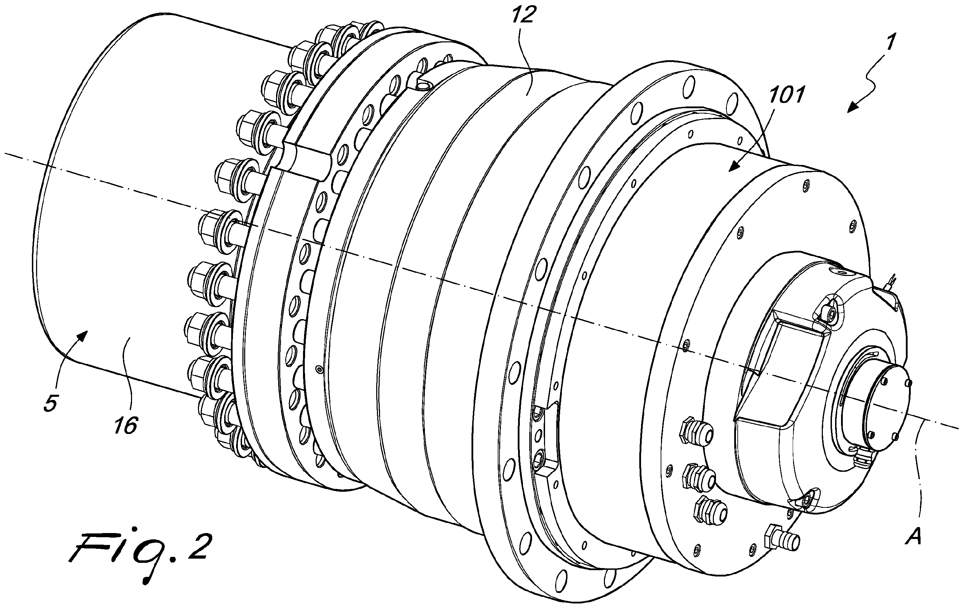

Figures 1 and 2 are two different perspective views of the reduction unit according to the invention;

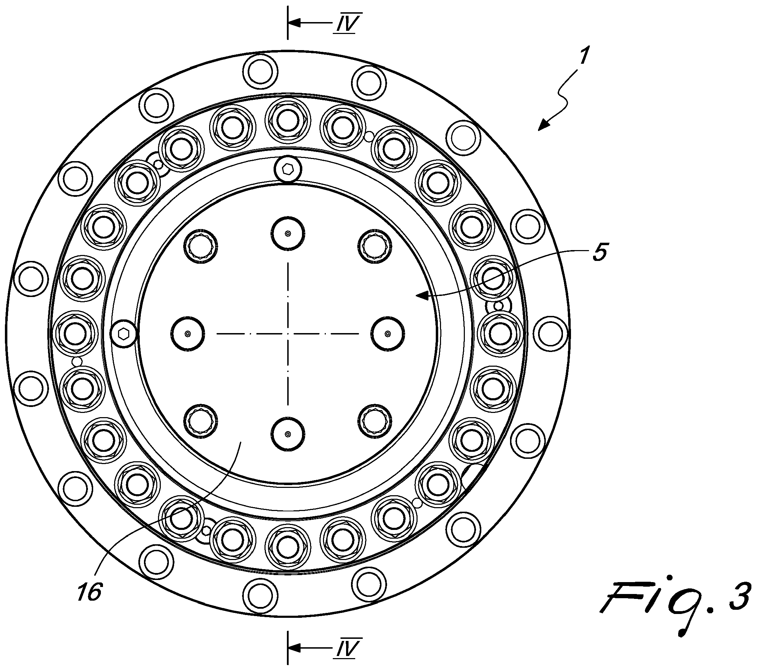

Figure 3 is a side view of the reduction unit of Figures 1 and 2;

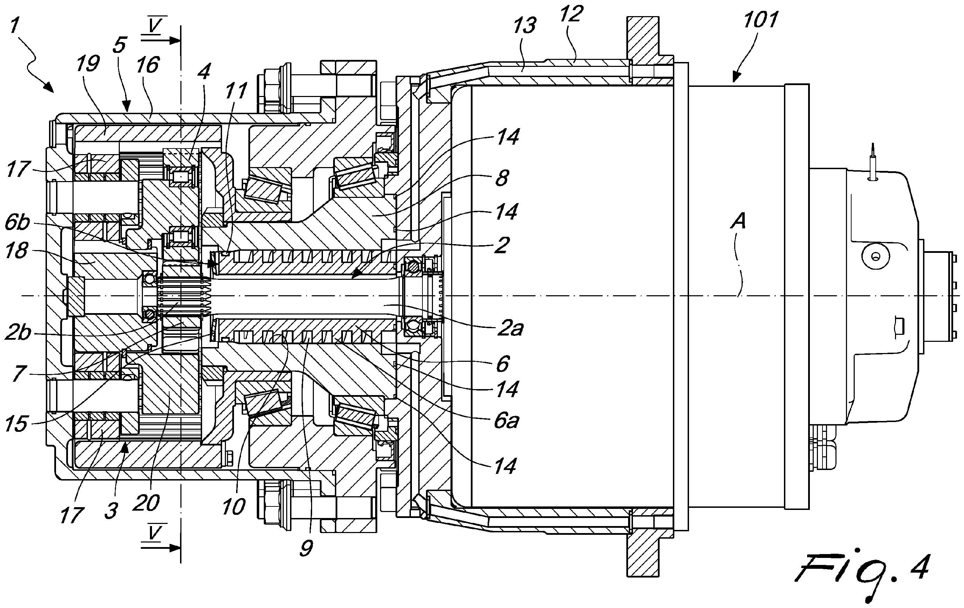

Figure 4 is a cross-sectional view of Figure 3, taken along the line IV-IV;
Figure 5 is a cross-sectional view of Figure 4, taken along the line V-V;

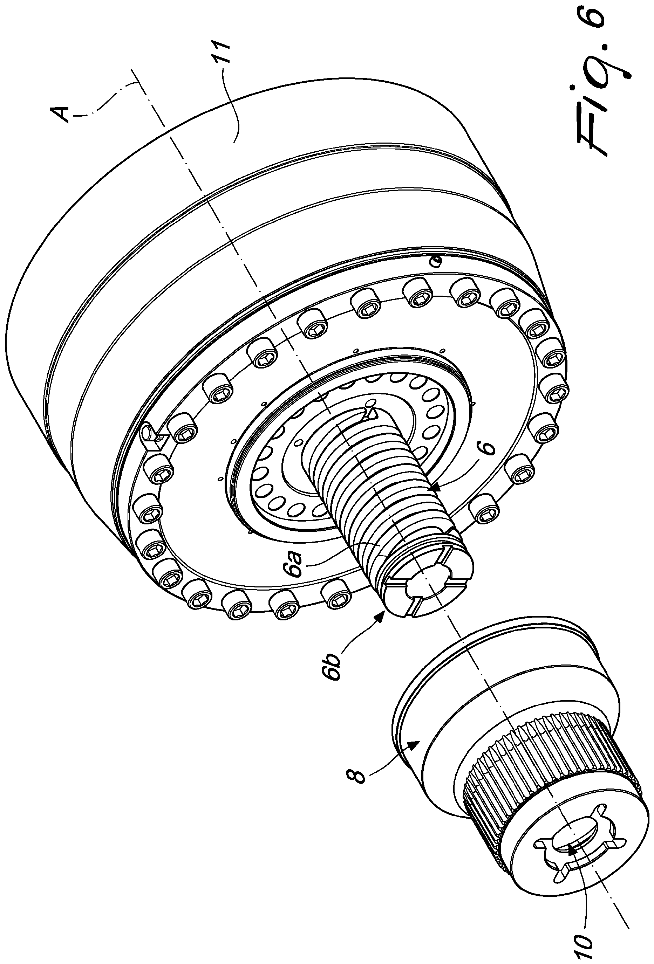

Figure 6 is a partially exploded perspective view of some components of the reduction unit of Figures 1 and 2;
Figure 7 is a side view of the work vehicle according to the invention;
Figure 8 shows the reduction unit of Figure 1, with an additional component;
Figure 9 shows the reduction unit of Figure 8, in the same cross-sectional view as Figure 4.

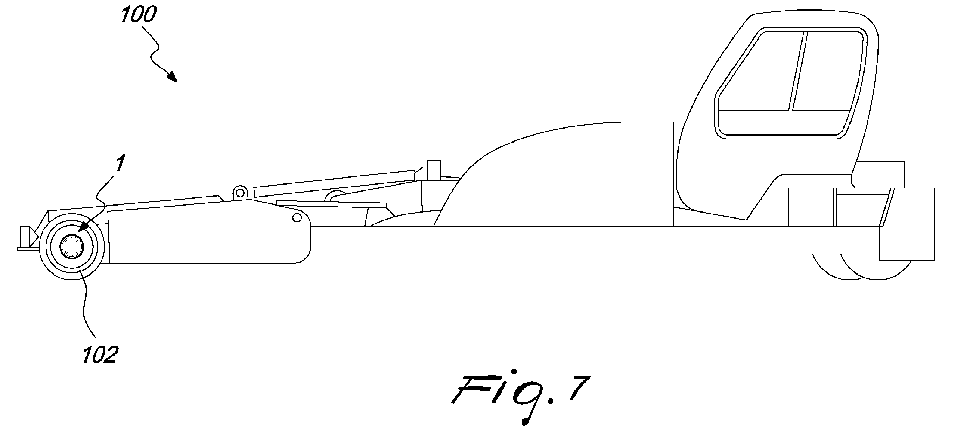

With reference to the figures, the reference numeral 1 generally designates a reduction unit adapted to be mounted on board airport tractors (such as the one in the accompanying Figure 7), forklift trucks and work vehicles 100 in general for the movement of goods, equipment and vehicles.

It is to be noted that the protection claimed herein covers first of all the reduction unit 1, independently of the specific vehicle 100 on which it is mounted and therefore even if it is produced, supplied or sold independently of the vehicle 100 (as a gear motor assembly for example); furthermore, the scope of protection includes any work vehicle 100, designed for the movement of goods, equipment and vehicles, which is fitted with one or more reduction units 1.

The reduction unit 1 comprises first of all at least one main shaft 2, which rotates about a main axis A and which can be coupled to the output shaft (not shown in the accompanying figures, but of known type) of an engine 101 of the work vehicle 100. The engine 101 is preferably but not necessarily electric (it could also be hydraulic, or of another type again).

The coupling is typically coaxial and can be implemented by means of a joint or in another manner, which can be conventional, while remaining within the scope of protection claimed herein.

Furthermore, the reducer unit 1 comprises at least one gear assembly 3, which comprises at least one input member 4 (in the preferred solution there is more than one, as will become clear below) and at least one terminal member 5.

Each input member 4 is driven in rotation by the main shaft 2, while the terminal member 5 is configured (by conveniently choosing the embodiment of the assembly 3 and the various components involved) for rotation about the main axis A with an angular speed that is different from (typically but not necessarily much less than) the angular speed of the main shaft 2.

Furthermore, the terminal member 5 is configured to be capable of being coupled integrally with, and directly or indirectly (i.e., with the interposition of one or more other components), at least one driving wheel 102 of the vehicle 100. The main axis A is also the axis of rotation of the driving wheel 102: the reduction unit 1 can rotate the latter at a different angular speed from that of the output shaft of the engine 101, which is responsible for dispensing the necessary mechanical energy.

As described up to this point, these are solutions that are well known in the sector, and which therefore will not be discussed further. In particular, although in the following pages more details will be given of a possible embodiment of the assembly 3 (which corresponds to the solution proposed in the accompanying figures), it needs to be noted that the gear assembly 3 can take any configuration and can comprise (in addition to the members 4, 5 mentioned above) any other component or gear system that the person skilled in the art would know to adopt, in order to obtain the transmission ratio and in general the desired functionality.

According to the invention, the reduction unit 1 comprises a hollow sleeve 6, which accommodates coaxially (and with play) at least one longitudinal portion 2a of the main shaft 2. In more detail, in the preferred embodiment the main shaft 2 has a longitudinal portion 2a which is accommodated in the sleeve 6 and which protrudes from the latter with at least a remaining end portion 2b, which turns, directly or indirectly, the input member 4. In particular, in the solution in the accompanying figures, a pinion 7 is keyed on the end portion 2b and meshes with the input member 4 (or with each input member 4).

The hollow sleeve 6 furthermore has a threading 6a along its lateral surface; thus, a (helical) channel 9 is delimited between the threading 6a and a body 8 for containing the sleeve 6, and can be passed through by a cooling fluid, and therefore achieves from this point onward the set aim.

In fact, the fluid acts on the main shaft 2, in that it flows along the helical channel 9 which is basically wound around it and proximate to it (this is achieved by choosing a reduced thickness for the sleeve 6): this makes it possible to cool the oil that (according to conventional methods) acts on the other components of the reduction unit 1 and the components of the reduction unit 1 that are in contact with the sleeve 6 (or near it). These components are the ones that are particularly subject to phenomena of overheating in conventional solutions, because they are spaced apart from the outside environment and are subjected to flows of heat originating from other parts of the reduction unit 1.

The fluid (not shown for the sake of simplicity in the accompanying figures) can be any, according to requirements and to the state of the art: for example, it could be a mineral oil, but it could also be water (or another fluid again). The fluid can also be the same as that used for cooling the engine 101.

In particular, the threading 6a is double-threaded, so as to define a channel 9 comprising a first helical groove and a second helical groove (which wind around the main shaft 2 in a mutually parallel manner), which are in mutual communication at a first end 6b of the sleeve 6. Thus, one of the two grooves effectively is the delivery and the other the return of the cooling circuit constituted by or comprising the channel 9: this makes it possible both to maximize the action of the fluid, in that effectively it passes over the main shaft 2 (the longitudinal portion 2a) and the body 8 for its entire length, twice, and also to simplify its implementation, since no other routes need be provided for the drainage of the fluid.

In the embodiment illustrated in the accompanying figures, for the purposes of non-limiting example of the invention, the body 8 is a hollow stator (rendered integral with the engine 101, directly or indirectly) with an axially symmetric shape. Such stator internally defines a conduit 10 which coaxially houses the sleeve 6. The transverse cross-section of the conduit 10 is chosen so as to accommodate without play (or with interference) the sleeve 6 (the top of its threadings), so as to effectively delimit the channel 9 and contain the cooling fluid inside it.

At the first end 6b, a first sealing gasket 11 can be placed between the sleeve 6 and the stator (or other containment body 8).

Conveniently, the reduction unit 1 can comprise a bell 12 which is configured (contoured and dimensioned) to be able to at least partially accommodate the engine 101 and which is coaxially laterally adjacent to the sleeve 6 (so as to follow the traditional arrangement of the engine 101, laterally adjacent and coaxial to the main structure of the reduction unit 1), on the opposite end with respect to the gear assembly 3.

Along the thickness of the walls of the bell 12 an additional duct 13 is provided, placed in communication with the channel 9. The duct 13 can then in turn form part of the cooling circuit, and makes it possible to more effectively manage the feeding and removal of the cooling fluid, even making it possible to draw and drain the fluid at a distance (from the main shaft 2 and from the sleeve 6).

In the embodiment in the accompanying figures, the body 8 and the bell 12 are separate elements, conveniently rendered integral; second sealing gaskets 14 are also provided, in order to guard against the danger of leaks. However, the possibility is not ruled out of making the body 8 and the bell 12 in a single piece.

Advantageously, the sleeve 6 can be elastically kept pressed against the bell 12 (or against another fixed element of the reduction unit 1) by a Belleville spring 15 (or other adapted elastic element), fitted on the opposite end onto the body 8. The spring 15 makes it possible to compensate for play, manufacturing tolerances, and effects owing to the thermal expansion of the components, thus contributing to the seal of the circuit.

As mentioned, the gear assembly 3 can assume any embodiment, according to the specific requirements, while remaining within the scope of protection claimed herein. The following paragraphs explain in detail the embodiment corresponding to the accompanying figures, which is of certain practical interest and corresponds to a preferred, but certainly not limiting, application of the scope of protection.

The assembly 3 can first of all comprise a plurality of first planet gears, which define respective input members 4 and are driven in rotation (directly or indirectly) by the main shaft 2. In particular, the first planet gears are driven in rotation by the pinion 7.

More specifically, the terminal member 5 can in turn comprise (or be constituted by) an axially symmetrical shell 16, which is configured to house at least the main shaft 2 and the sleeve 6.

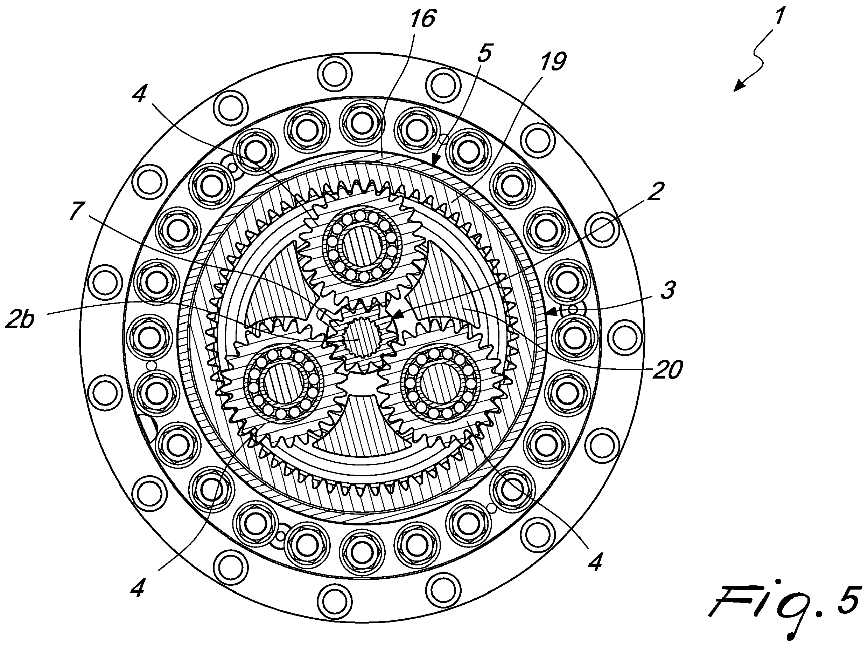

The shell 16 is rigidly coupled to second planet gears 17, which are interposed between a sun gear 18, driven in rotation by the mentioned first planet gears, and an internally toothed ring gear 19, which can be fixed, as in the solution in the accompanying figures, or which rotates integrally with the shell 16. More specifically, as can be seen clearly in Figure 5, the first planet gears mesh (in addition to with the pinion 7) also with the ring gear 19, so as to "orbit" around the rotation axis A (they are moved by the pinion 7) and turn the respective planet gear carrier 20, which in turn is integral with the sun gear 18.

The second planet gears 17, the sun gear 18 and the ring gear 19 are also comprised in the gear assembly 3.

So from the main shaft 2, the motive force passes to the first planet gears (the input members 4), which by orbiting around the main axis A turn the planet gear carrier 20 and therefore the sun gear 18, which is integral with the latter; the rotation of the sun gear 18 causes the movement of the second planet gears 17, which by orbiting in turn around the main axis A cause the rotation of the shell 16.

The shell 16 therefore rotates about the rotation axis A by virtue of the meshing in series of the other components mentioned, driven directly or indirectly in rotation by the main shaft 2 and therefore by the engine 101, and the angular speed of the shell 16 can be varied significantly, with respect to the speed of the main shaft 2.

The shell 16, either directly or with the interposition of other elements, can be rendered integral with the driving wheel 102 (which effectively is mounted coaxially on it), which thus receives motive force from the engine 101 through the reduction unit 1.

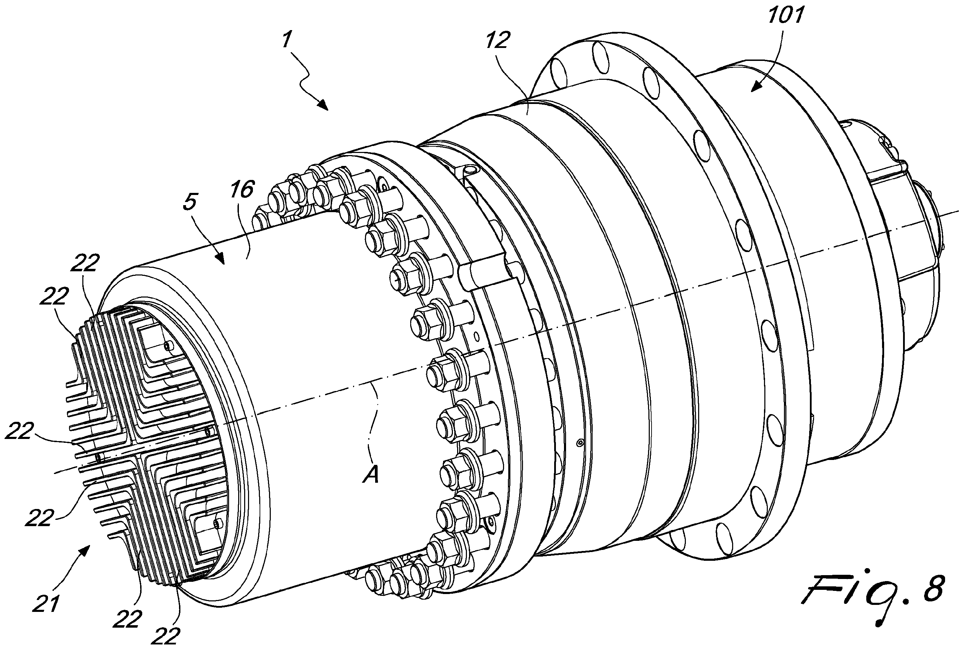

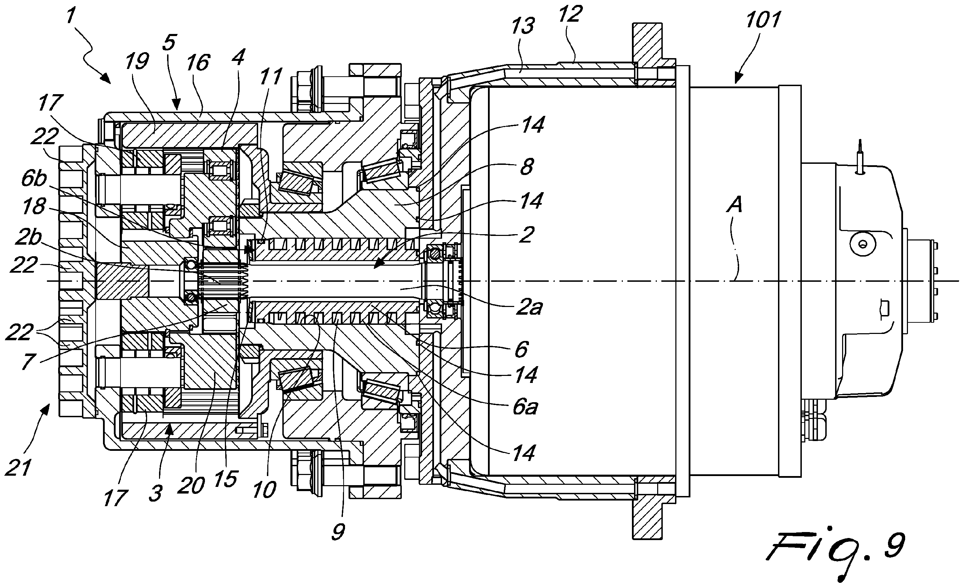

Usefully, as shown in Figures 8 and 9, the reduction unit 1 can comprise a cover 21, which is arranged so as to at least partially close the gear assembly 3 and which is configured to facilitate the dissipation of heat (outward from the assembly 3). The cover 21 thus makes it possible to increase the effectiveness of the cooling performed by the fluid inside the channel 9.

In particular, in a possible embodiment, the cover 21 can comprise a plurality of bent fins 22, for example (not necessarily) made of aluminum.

Even more specifically, and with further reference to Figures 8 and 9, the cover 21 can be arranged at one longitudinal end of the shell 16, cooperating with the latter to contain the assembly 3.

As anticipated above, in addition to the reduction unit 1, another object of the protection claimed herein is a work vehicle 100 designed for the movement of goods, equipment and vehicles. For example, such work vehicle 100 can be an airport tractor or a forklift truck, but it should be noted that the protection claimed herein is not limited to such specific types of work vehicle 100.

In particular, the accompanying Figure 7 shows a vehicle 100 constituted by an airport tractor, in that this constitutes an application of particular practical interest. The peculiarities of the reduction unit 1, which can be mounted on board the tractor, are in fact found to be of great benefit, in that tractors are considerably subjected to the risk of malfunctions or breakdowns owing to overheating of the reduction unit (when is chosen conventional), in particular when it is used for longer distances than those required for executing the "pushback" maneuver (and therefore, for example, when towing an aircraft to the maintenance hangar, using all available power).

In any case, the vehicle 100 can move over ground by the action of at least one driving wheel 102 (typically there are two or four of these), driven by an engine 101 (typically each driving wheel 102 is driven by a respective engine 101, but it is also possible for two or more driving wheels 102 arranged side by side, located on the same side of the vehicle 100, to be driven integrally and together by the same engine 101).

According to the invention, the vehicle 100 comprises at least one reduction unit 1 according to what is described up to this point: in particular, the vehicle 100 comprises a reduction unit 1 for each engine 101 and therefore when reference is made below to "a" (or "the") reduction unit 1, it should evidently be understood as applying to "each" reduction unit 1.

In more detail, the reduction unit 1 comprises at least one main shaft 2 coupled to the output shaft of the respective engine 101 and a terminal member 5 which is integrally coupled, directly or indirectly, to at least one corresponding driving wheel 102.

The operation of the reduction unit (and of the vehicle) according to the invention, insofar as it can easily be deduced from the foregoing description, is as below.

The reduction unit 1 is coupled to an engine 101, in such a way that the main shaft 2 can rotate about the axis A driven by the output shaft of the engine 101 (or in any case by the engine 101). By virtue of the gear assembly 3 the rotation of the main shaft 2 is translated to a rotation, with a different angular speed, of the terminal member 5 of the assembly 3 (the shell 16 in particular), which can be rendered integral with the driving wheel 102 of the vehicle 100, which thus in turn is made to turn.

In such context, in an entirely peculiar and innovative manner the reduction unit 1 entails the use of a sleeve 6, which houses the main shaft 2 and which has an external threading 6a, so as to delimit (in cooperation with the body 8) the channel 9 of a cooling circuit. A cooling fluid can thus flow along the channel 9 in order to facilitate dispersion of the heat from the main shaft 2 and from the body 8 and therefore from the reduction unit 1 (moreover taking advantage of the helical configuration in order to maximize the useful heat transfer time).

In practice it has been found that the reduction unit 1 and the work vehicle 100 according to the invention fully achieve the set aim and objects, in that the sleeve 6, the body 8 and the channel 9 make it possible to obtain an effective cooling system.

In particular, the cooling relates to the main shaft 2 and the body 8, which as has already been seen in the foregoing pages are components that otherwise are particularly sensitive to overheating (owing to their placement and close proximity to other components that can emanate heat).

Furthermore, the helical shape structure of the channel 9 makes it possible to maximize the useful heat transfer time, with a solution that is, at the same time, advantageously very compact, easily and practically implemented, and structurally simple (with the possibility of using the duct 13 for feeding and draining the fluid, in accordance with different requirements).

The invention thus conceived is susceptible of numerous modifications and variations, all of which are within the scope of the appended claims. Moreover, all the details may be substituted by other, technically equivalent elements.

In the embodiments illustrated, individual characteristics shown in relation to specific examples may in reality be substituted with other, different characteristics, existing in other embodiments.

In practice, the materials employed, as well as the dimensions, may be any according to requirements and to the state of the art.

The disclosures in Italian Patent Application No. 102023000004710 from which this application claims priority are incorporated herein by reference.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A reduction unit for airport tractors, forklift trucks and work vehicles (100) in general for the movement of goods, equipment and vehicles, comprising at least:
- a main shaft (2), which rotates about a main axis (A) and can be coupled to the output shaft of an engine (101) of the work vehicle (100),
- a gear assembly (3), comprising at least one input member (4), driven in rotation by said main shaft (2), and a terminal member (5), configured for rotation about said main axis (A) with an angular speed that is different from the angular speed of said main shaft (2),
said terminal member (5) being configured for integral coupling, direct or indirect, to at least one driving wheel (102) of the work vehicle (100),
**characterized in that** it comprises a hollow sleeve (6), which accommodates coaxially at least one longitudinal portion (2a) of said main shaft (2) and is provided with a threading (6a) along its lateral surface, a channel (9) which can be passed through by a cooling fluid being delimited between said threading (6a) and a body (8) for containing said sleeve (6).

2. The reduction unit according to claim 1, **characterized in that** said threading (6a) is of the double-threaded type and is adapted for defining a channel (9) comprising a first helical groove and a second helical groove placed in mutual communication at a first end (6b) of said sleeve (6).

3. The reduction unit according to claim 1 or 2, **characterized in that** said body (8) is a hollow stator with an axially symmetrical shape, which internally defines a conduit (10) for the coaxial accommodation of said sleeve (6).

4. The reduction unit according to one or more of the preceding claims, **characterized in that** it comprises a bell (12) which is configured for the at least partial housing of the engine (101) and is coaxially laterally adjacent to said sleeve (6), on the opposite end with respect to said gear assembly (3), a duct (13) placed in communication with said channel (9) being provided along the thickness of the walls of said bell (12).

5. The reduction unit according to claim 4, **characterized in that** said sleeve (6) is elastically kept pressed against said bell (12) by a Belleville washer (15), fitted on the opposite end onto said body (8).

6. The reduction unit according to one or more of the preceding claims, **characterized in that** said gear assembly (3) comprises a plurality of first planet gears, which define said respective input members (4) and are driven in rotation by said main shaft (2).

7. The reduction unit according to claim 6, **characterized in that** said terminal member (5) comprises an axially symmetrical shell (16), configured to house at least said main shaft (2) and said sleeve (6), said shell (16) being rigidly coupled to second planet gears (17), which are interposed between a sun gear (18), driven in rotation by said first planet gears, and an internally toothed ring gear (19), which is fixed or rotates integrally with said shell (16), said second planet gears (17), said sun gear (18) and said ring gear (19) being comprised in said gear assembly (3).

8. The reduction unit according to one or more of the preceding claims, **characterized in that** it comprises a cover (21), arranged so as to at least partially close said gear assembly (3) and configured for the dissipation of heat.

9. The reduction unit according to claim 8, **characterized in that** said cover (21) comprises a plurality of bent fins (22).

10. The reduction unit according to claim 8 or 9, **characterized in that** said cover (21) is arranged at one end longitudinal of said shell (16).

11. A work vehicle for the movement of goods, equipment and vehicles, for example of the type of an airport tractor or a forklift truck, which can move over ground by virtue of the action of at least one driving wheel (102), driven by an engine (101), **characterized in that** it comprises at least one reduction unit (1) according to one or more of the preceding claims, comprising at least said main shaft (2) coupled to the output shaft of the respective said engine (101) and said terminal member (5) which is integrally coupled, directly or indirectly, to at least one corresponding said driving wheel (102).
